# EUROPEAN PATENT SPECIFICATION

(11) **EP 0 758 297 B1**
(45) Date of publication and mention of the grant of the patent: **25.03.1998**
(21) Application number: 95918056.3
(22) Date of filing: 05.05.1995
(51) Int. Cl.: B41J 2/455

(54) **PATTERN DISRUPTION IN THERMAL TRANSFER PRINTING**
MUSTERSTÖRUNG BEIM WÄRMETRANSFERDRUCKVERFAHREN
RUPTURE DE LA CONFIGURATION EN IMPRESSION PAR TRANSFERT THERMIQUE

(30) Priority: 05.05.1994 GB 9408904
(43) Date of publication of application: 19.02.1997
(73) Proprietor: IMPERIAL CHEMICAL INDUSTRIES PLC, London SW1P 3JF (GB)
(72) Inventor: HANN, Richard, Anthony, Ipswich Suffolk IP1 3TE (GB)
(74) Representative: Morton, Colin David
(86) International application number: GB9501023
(87) International publication number: WO9530545

(56) References cited:
- GB-A- 2 264 793
- US-A- 4 786 084
- XEROX DISCLOSURE JOURNAL, vol.16, no.1, January 1991, STAMFORD pages 17 - 19, XP167943 LOCE 'pixel averaging for image bar uniformity correction'
- RESEARCH DISCLOSURE, no.357, January 1994, EMSWORTH pages 25 - 27, XP000425353 'laser printer'
- PATENT ABSTRACTS OF JAPAN vol. 13, no. 577 (M-910) (3925) 20 December 1989 & JP,A,01 241 444 (RICOH CO LTD) 26 September 1989

## Description

This invention relates to a method of thermal dye transfer printing.

Thermal dye transfer printing is a generic term for processes in which one or more thermally transferable dyes are caused to transfer from a dye sheet to a receiver sheet in response to thermal stimuli. Using a dye sheet comprising a thin substrate supporting a dye coat containing one or more such dyes uniformly spread over an entire printing area of the dye sheet, printing can be effected by heating selected discrete areas of the dye sheet whilst the dye coat is pressed against a receiver sheet. The shape of the pattern transferred is determined by the number and location of the discrete areas which are subject to heating. Complex images can be built up from large numbers of very small pixels placed close together, the resolution of the final image being determined by the number, size and spacing of such pixels. Full colour prints can be produced by printing with different coloured dye coats sequentially in like manner. Usually, the dye sheet is in the form of a ribbon with the different coloured dye coats being in the form of discrete stripes transverse to the axis of the ribbon in a repeated sequence along the ribbon, printing of the three colours being effected by moving the dye ribbon axially relative to the receiver sheet and whatever means are used to generate the thermal stimuli.

The thermal stimuli may be produced by a thermal printing head having a matrix of tiny heating elements (typically six or more to the millimetre) which are selectively energisable to transfer individual pixels. By programming the printing head to respond to electronic signals representing monochrome or full colour images (for example from a video camera, electronic still
camera or computer), hard copies of those images can be produced. Alternatively, the thermal stimuli can be produced by means of a laser beam which is scanned across the dye coat in a raster pattern, the intensity of the beam being modulated in accordance with the aforesaid electronic signals to transfer the individual pixels. In either case, the pixels are typically arranged in a parallel rows and columns forming a rectangular matrix.

It is known that during thermal printing the surface of the receiver sheet is distorted, possibly due to the large temperature differentials involved. This is of little account when a print head is used but the distortion produced by a laser is on a very much smaller scale and is repeated at a spatial frequency corresponding to the pixel spacing. As this spacing is typically comparable to the wavelength of visible light, the distorted surface can act as a diffraction grating and hence cause unwanted coloured bands to be visible over the print area. This effect, which is most noticeable with opaque prints rather than transparencies, can give a holographic appearance to the printed image.

In most cases this appearance is undesirable and it is one object of this invention to obviate the effect. However, in certain circumstances, for example where security information needs to be present such as in an identity card, the effect, if suitably controlled, could be of use and it is a further object of the invention to provide a method by which an identifiable pattern or mark is produced.

According to one aspect of the invention, there is provided a method of light induced thermal dye transfer printing in which the image is formed from a series of parallel rows of spaced apart pixels forming a regular grid pattern, characterised in that the regular grid pattern is disrupted in a random manner over at least part of the area of the printed image.

To obviate the effect, the random disruption is effected over the entire area of the image. However, if the disruption is effected over only a part of the area of the image, then the regions where no disruption is effected will continue to show a diffraction effect and by suitable control of the disrupted areas, the non-disrupted areas can be arranged to form an identifiable pattern.

According to a preferred aspect of the invention, the disruption is effected by varying in a random manner at least one of
the spacing between individual pixels in a row,
the position of pixels in one row relative to the pixels in an adjacent row, or
the spacing between rows.

In a preferred embodiment, the random variation is produced by controlling the means for producing the scanning pattern of the laser.

For example, if the scanning pattern of the laser to produce a row of pixels is produced by moving the laser spot to a series of fixed positions by means of a stepping mirror, the spacing between pixels in a row is altered by varying the size of the steps.

Alternatively, if the scanning pattern of the laser to produce a row of pixels is produced by pulsing the laser on and off, the spacing between pixels in a row is altered by varying the start times of the pulses.

The relative positions of pixels in adjacent rows may be varied by making an initial random displacement at the start of each raster line.

If relative movement between the laser and the dye sheet is produced by a stepping motor, the spacing between rows may be altered by varying the number of steps the motor moves between rows. In all the above cases, the random variation may be generated by inserting an appropriate signal into the scanning pattern, for example, by altering a computer program.

According to a further preferred aspect of the invention, the variation is produced by means of a separate optical element that causes small displacements on a random basis.

According to a further preferred aspect of the invention, the spacing between pixels in a row and the positions of pixels in one row relative to the pixels in an adjacent row are simultaneously varied by applying to a raster synchronisation signal a varying voltage whose period is less than and not a simple submultiple of the row scan period.

According to the invention, there is also provided a laser thermal transfer printer comprising a laser , means for holding a dye sheet and a receiver sheet during a printing operation, means for focusing the laser on the dye sheet to form a pixel sized spot and for producing relative movement between the spot and the dye sheet in a first raster scanning direction, means for producing relative movement between the spot and the dye sheet in a second raster scanning direction and means for producing signals to synchronise the movement of the spot in the first and second raster scanning directions, characterised by the provision of means for applying to the first raster scanning direction synchronisation signal a varying voltage whose period is less than and not a simple submultiple of the scan in the first raster scanning direction.

Preferably, the means for applying the varying voltage is an oscillator circuit.

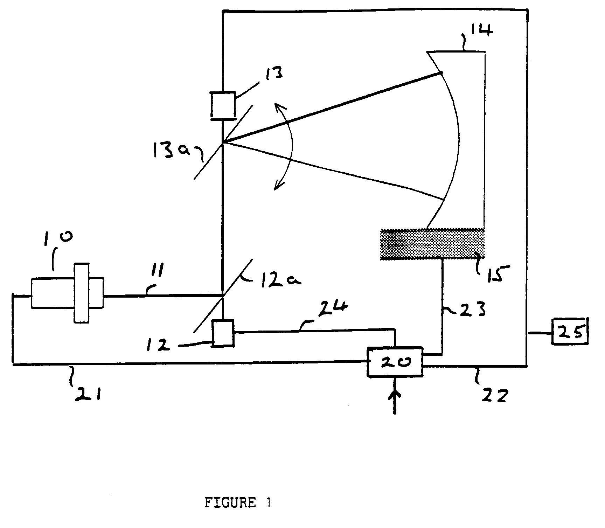

The invention will be more readily understood from the following description of a preferred embodiment taken in conjunction with the accompanying drawing which shows a diagrammatic representation of a laser thermal transfer printer.

Referring to the drawing, a printer consists of a laser 10, producing a collimated beam 11, a first mirror galvanometer 12 having a mirror 12a, a second mirror galvanometer 13 having a minor 13a and an arcuate member 14 against which a dye sheet and a receiver sheet are held in contact under vacuum during the printing operation, the member 14 being positioned so that the laser beam, when turned on, is focused to form a pixel-sized, ie circa 20µm, spot at the dye sheet. Relative movement between the spot and the dye sheet is produced in a first raster scanning direction by arcuate movement of the mirror 13a and in a second raster scanning direction by movement of the member 14 by means of a stepping motor 15.

Let it be assumed that the printer is required to print a monochromatic image derived from a high definition video camera.

The output signal from the video camera is fed into a central processor unit 20 where the data representing the brightness of the object is separated from the raster synchronisation signals, the brightness signal 21 being fed to the laser to modulate the intensity of the beam and the raster synchronisation signals 22 and 23 being fed to the galvanometer 13 and the stepping motor 15. The signal fed to the galvanometer 13 may be such as to cause arcuate movement of the mirror 13a in a stepwise or continuous manner. In the case of stepwise movement, the laser is triggered in synchronism with the steps, whereas in the case of continuous movement, the laser is triggered at regular intervals. In either case, the end result is a row of regularly spaced pixels, further rows being created by the dye sheet being moved under the control of the synchronisation signal fed to the stepping motor so that a grid pattern of pixels is built up.

Such a pattern is regular and could produce the interference problem mentioned above. However, this regularity can be disrupted by causing a random variation in the spacing of the pixels in the rows, the position of pixels in one row relative to the pixels in an adjacent row or in the spacing of the rows.

In one embodiment, this variation is produced by generating in the control circuit 20 an appropriate random control signal 24 which is fed to the galvanometer 12 to cause a deflection of the mirror 12a whilst the laser is on. The signal may cause a deflection in either scan direction, at an angle to the scan direction, or in both scan directions at will, depending on the orientation of the tilting means.

In an alternative embodiment, the galvanometer 12 may be omitted and the random control signal used to alter the raster synchronisation signal 22 to vary the movement of the mirror 13a. However, the embodiment using two galvanometers has the advantage that the additional control signal can be generated by a separate circuit which is a simpler arrangement electronically.

Variation in the position of pixels in one row relative to pixels in an adjacent row may be produced by imposing a random delay on the start of the raster synchronisation signal 22.

Variation in the spacing between the rows can be effected by applying an additional control signal with the raster synchronisation signal 23 to the stepping motor to vary the number of steps between rows.

In a further alternative embodiment, disruption in both the spacing between pixels in a row and the position of pixels in one row relative to the pixels in an adjacent row may be achieved by applying to the raster synchronisation signal 22 a varying voltage whose period is less than and not a simple submultiple of the row scan period.

If, for example, the voltage is sinusoidal, the spacing between pixels in a row increases and decreases through a maximum and a minimum for each cycle, the period of the voltage determining how many times this is repeated for each row. By making the period of the voltage unequal to the scan period or a submultiple thereof, repetition of the same pixel spacing on adjacent lines is avoided.

The sinusoidal voltage can be generated by a simple oscillator circuit separate from the control circuit and hence can be retrofitted to existing printers. Switching the oscillator in and out enables the disrupted areas to be arranged so that the no-disrupted areas form a required pattern

The following examples illustrate the invention.

### Example 1

Using the printer described above, standard dye sheets and a commercial opaque receiver sheet, a standard magenta print was prepared. The pixel diameter was 20 µm, the spacing in each row was 11 µm and the spacing between the rows was 16 µm, the row spacing being equal to 22 steps of the stepping motor. The process was repeated to produce a series of samples, with the stepping motor being controlled such that the number of steps between adjacent rows varied, the degree of variation increasing along the series as shown in the Table. In order to allow easy comparison and to rank the effect produced, the samples were arranged in a line and examined by shining a bright, collimated beam of light at an angle of approximately 45° on to the surface. The light reflected off the surface of the samples was projected on to a white screen and the coloured bands of diffracted light assessed visually.

As shown in the Table, there was a large difference between the standard sample and the sample with the lowest level of variation (+/- 1 unit, ie 21-23 steps). Increasing the variation to two units gave a further improvement but it was difficult to discern further improvement until the variation was increased to five units.

**TABLE**

| Sample | Number of steps | Observed Spectrum |
|---|---|---|
| 1 | 22 | Strongest |
| 2 | 21-23 | Intermediate |
| 3 | 20-24 | Weak |
| 4 | 19-25 | Weak |
| 5 | 18-26 | Weak |
| 6 | 17-27 | Weakest |

The example was repeated using a transparent receiver sheet with similar results.

### Example 2

A further magenta print was made as in Example 1 using a +/- 1 unit of variation except that after every 100th line, the next 100 lines had a regular spacing of 22 steps. The resultant print showed a clear pattern corresponding to the regularly spaced lines.

## Claims

1. A method of light induced thermal dye transfer printing in which the image is formed from a series of parallel rows of spaced apart pixels forming a regular grid pattern, characterised in that the regular grid pattern is disrupted in a random manner over at least part of the area of the printed image.

2. A method according to Claim 1, characterised in that the disruption is effected over the entire area of the image.

3. A method according to Claim 1, characterised in that the disruption is effected over only a part of the image.

4. A method according to any preceding claim, characterised in that the disruption is effected by varying in a random manner at least one of
the spacing between individual pixels in a row;
the position of pixels in one row relative to the pixels in an adjacent row; or
the spacing between rows.

5. A method according to any preceding claim, characterised in that the random variation is produced by varying the scanning pattern of the laser.

6. A method according to Claim 5, in which the scanning pattern of the laser to produce a row of pixels is produced by moving the laser spot to a series of fixed positions by means of a stepping mirror, characterised in that the spacing between pixels in a row is altered by varying the size of the steps.

7. A method according to Claim 5, in which the scanning pattern of the laser to produce a row of pixels is produced by pulsing the laser on and off, characterised in that the spacing between pixels in a row is altered by varying the start times of the pulses.

8. A method according to Claim 5, characterised in that the relative positions of pixels in adjacent rows is varied by displacing randomly the start position of each raster line.

9. A method according to Claim 4, in which relative movement between the laser and the dye sheet is produced by a stepping motor, characterised in that the spacing between rows is altered by varying the number of steps the motor moves between rows.

10. A method according to Claim 5, characterised in that the spacing between pixels in a row and the positions of pixels in one row relative to the pixels in an adjacent row are simultaneously varied by applying to a raster synchronisation signal a varying voltage whose period is less than and not a simple submultiple of the row scan period.

11. A laser thermal transfer printer comprising a laser (10), means (14) for holding a dye sheet and a receiver sheet during a printing operation, means (13,13a) for focusing the laser on the dye sheet to form a pixel sized spot and for producing relative movement between the spot and the dye sheet in a first raster scanning direction, means (15) for producing relative movement between the spot and the dye sheet in a second raster scanning direction and means (20) for producing signals to synchronise the movement of the spot in the first and second raster scanning directions, characterised by the provision of means (25) for applying to the first raster scanning direction synchronisation signal a varying voltage whose period is less than and not a simple submultiple of the scan in the first raster scanning direction.

12. A printer according to Claim 11, characterised in that the means (25) is an oscillator circuit.

## Patentansprüche

1. Verfahren zum lichtinduzierten Wärmefarbübertragungsdrucken, bei dem das Bild durch eine Serie von parallelen Zeilen von ein regelmäßiges Gittermuster bildenden, beabstandeten Bildelementen ausgebildet wird,
**dadurch gekennzeichnet, daß**
das regelmäßige Gittermuster in zufälliger Weise über zumindest einen Teil des Bereichs des gedruckten Bilds unterbrochen wird.

2. Verfahren nach Anspruch 1,
**dadurch gekennzeichnet, daß**
das Unterbrechen über den gesamten Bereich des Bilds durchgeführt wird.

3. Verfahren nach Anspruch 1,
**dadurch gekennzeichnet, daß**
das Unterbrechen nur über einen Teil des Bilds durchgeführt wird.

4. Verfahren nach einem der vorangehenden Ansprüche,
**dadurch gekennzeichnet, daß**
das Unterbrechen durch Variieren in zufälliger Weise zumindest eines von
dem Anstand zwischen einzelnen Bildelementen in einer Zeile,
der Position von Bildelementen in einer Zeile relativ zu den Bildelementen in einer benachbarten Zeile oder
des Abstands zwischen Zeilen
durchgeführt wird.

5. Verfahren nach einem der vorangehenden Ansprüche,
**dadurch gekennzeichnet, daß**
das zufällige Variieren durch Variieren des Abtastmusters eines Lasers erzeugt wird.

6. Verfahren nach Anspruch 5, wobei
das Abtastmuster des Lasers zum Erzeugen einer Zeile von Bildelementen durch Bewegen des Laserpunkts auf eine Serie von festgelegten Positionen durch einen Schrittspiegel erzeugt wird,
**dadurch gekennzeichnet, daß**
der Abstand zwischen Bildelementen in einer Zeile durch Variieren der Größe der Schritte geändert wird.

7. Verfahren nach Anspruch 5, wobei
das Abtastmuster des Lasers zum Erzeugen einer Zeile von Bildelementen durch pulsierendes Ein- und Ausschalten des Lasers erzeugt wird,
**dadurch gekennzeichnet, daß**
der Abstand zwischen Bildelementen in einer Zeile durch Variieren der Startzeiten der Impulse geändert wird.

8. Verfahren nach Anspruch 5,
**dadurch gekennzeichnet, daß**
die relativen Positionen von Bildelementen in benachbarten Zeilen durch zufälliges Verschieben der Start-position jeder Rasterzeile variiert werden.

9. Verfahren nach Anspruch 4, wobei
eine relative Bewegung zwischen dem Laser und dem Farbblatt durch einen Schrittmotor erzeugt wird,
**dadurch gekennzeichnet, daß**
der Abstand zwischen Zeilen durch Variieren der Anzahl von Schritten geändert wird, mit denen sich der Motor zwischen den Zeilen bewegt.

10. Verfahren nach Anspruch 5,
**dadurch gekennzeichnet, daß**
der Abstand zwischen Bildelementen in einer Zeile und die Positionen von Bildelementen in einer Zeile relativ zu den Bildelementen in einer benachbarten Zeile gleichzeitig durch Erzeugen einer variierenden Spannung variiert werden, deren Periode kleiner als die Zeilenabtastdauer und kein einfacher Bruch mit ganzzahligem Nenner der Zeilenabtastdauer ist, als ein Rastersynchronisationssignal.

11. Laserwärmeübertragungsdrucker mit
einem Laser (10),
einer Einrichtung (14) zum Halten eines Farbblatts und eines Aufnahmeblatts während eines Druckvorgangs,
einer Einrichtung (13, 13a) zur Fokussierung des Lasers auf das Farbblatt zur Ausbildung eines bildelementgroßen Punkts und zur Erzeugung einer relativen Bewegung zwischen dem Punkt und dem Farbblatt in einer ersten Rasterabtastrichtung,
einer Einrichtung (15) zur Erzeugung einer relativen Bewegung zwischen dem Punkt und dem Farbblatt in einer zweiten Rasterabtastrichtung und
einer Einrichtung (20) zur Erzeugung von Signalen zur Synchronisation der Bewegung des Punkts in den ersten und zweiten Rasterabtastrichtungen,
**gekennzeichnet durch**
eine Einrichtung (25) zur Erzeugung einer variierenden Spannung, deren Periode kleiner als die Abtastdauer in der ersten Rasterabtastrichtung und kein einfacher Bruch mit einem ganzzahligen Nenner der Abtastdauer in der ersten Rasterabtastrichtung ist, als das Synchronisationssignal in der ersten Rasterabtastrichtung.

12. Drucker nach Anspruch 11,
**dadurch gekennzeichnet, daß**
die Einrichtung (25) eine Oszillatorschaltung ist.

## Revendications

1. Procédé d'impression par transfert thermique d'encre induit par la lumière dans lequel l'image est formée d'une série de rangées parallèles de pixels mutuellement espacés constituant une grille régulière, caractérisé en ce que la configuration de grille régulière est rompue d'une manière aléatoire sur au moins une partie de la surface de l'image imprimée.

2. Procédé suivant la revendication 1, caractérisé en ce que la rupture est effectuée sur toute la surface de l'image.

3. Procédé suivant la revendication 1, caractérisé en ce que la rupture est effectuée sur une partie seulement de l'image.

4. Procédé suivant une quelconque des revendications précédentes, caractérisé en ce que la rupture est effectuée par variation d'une manière aléatoire d'au moins un de
l'espacement entre pixels individuels dans une rangée ;
la position des pixels d'une rangée par rapport aux pixels d'une rangée adjacente ; ou
l'espacement entre rangées.

5. Procédé suivant une quelconque des revendications précédentes, caractérisé en ce que la variation aléatoire est produite par variation de la configuration de balayage du laser.

6. Procédé suivant la revendication 5, dans lequel la configuration de balayage du laser pour produire une rangée de pixels est engendrée par déplacement du spot laser à une série de positions fixes au moyen d'un miroir pas à pas, caractérisé en ce que l'espacement entre pixels dans une rangée est modifié par variation de la dimension des pas.

7. Procédé suivant la revendication 5, dans lequel la configuration de balayage du laser pour produire une rangée de pixels est engendrée par impulsion du laser en marche et arrêt, caractérisé en ce que l'espacement entre pixels dans une rangée est modifié par variation des instants de début des impulsions.

8. Procédé suivant la revendication 5, caractérisé en ce que les positions relatives des pixels dans des rangées adjacentes sont modifiées par déplacement de façon aléatoire de la position de départ de chaque ligne de trame.

9. Procédé suivant la revendication 4, dans lequel le mouvement relatif entre le laser et la feuille encrée est engendré par un moteur pas à pas, caractérisé en ce que l'espacement entre rangées est modifié par variation du nombre de pas dont le moteur se déplace entre les rangées.

10. Procédé suivant la revendication 5, caractérisé en ce que l'espacement entre pixels dans une rangée et les positions des pixels d'une rangée par rapport aux pixels d'une rangée adjacente sont modifiés simultanément par application, à un signal de synchronisation de trame, d'une tension variable dont la période est inférieure à la période de balayage de rangée et non un sous-multiple simple de celle-ci.

11. Imprimante par transfert thermique à laser comprenant un laser (10), des moyens (14) pour maintenir une feuille encrée et une feuille réceptrice pendant une opération d'impression, des moyens (13, 13a) pour focaliser le laser sur la feuille encrée afin de former un spot de la dimension du pixel et pour engendrer un mouvement relatif entre le spot et la feuille encrée dans une première direction de balayage de trame, des moyens (15) pour engendrer un mouvement relatif entre le spot et la feuille encrée dans une deuxième direction de balayage de trame, et des moyens (20) pour produire des signaux de synchronisation du mouvement du spot dans les première et deuxième directions de balayage de trame, caractérisée par l'utilisation de moyens (25) pour appliquer, au signal de synchronisation de la première direction de balayage de trame, une tension variable dont la période est inférieure à la période de balayage dans la première direction de balayage de trame et non un sous-multiple simple de celle-ci.

12. Imprimante suivant la revendication 11, caractérisée en ce que les moyens (25) comprennent un circuit oscillateur.
